# EUROPEAN PATENT SPECIFICATION

(11) **EP 4 375 988 B1**
(45) Date of publication and mention of the grant of the patent: **14.01.2026**
(21) Application number: 22894679.4
(22) Date of filing: 08.11.2022
(51) Int. Cl.: G10L 17/06, G10L 15/02, G10L 15/08, G10L 21/0272, G10L 25/51, G10L 17/04

(54) **AUDIO SIGNAL PROCESSING METHOD AND APPARATUS, AND DEVICE AND STORAGE MEDIUM**
AUDIOSIGNALVERARBEITUNGSVERFAHREN UND -VORRICHTUNG SOWIE VORRICHTUNG UND SPEICHERMEDIUM
PROCÉDÉ ET APPAREIL DE TRAITEMENT DE SIGNAL AUDIO, DISPOSITIF ET SUPPORT DE STOCKAGE

(30) Priority: 16.11.2021 CN 202111351380
(43) Date of publication of application: 29.05.2024
(73) Proprietor: Zhejiang Alibaba Robot Co., Ltd., Hangzhou, Zhejiang 310052 (CN)
(72) Inventor: WANG, Xianliang, Hangzhou, Zhejiang 311121 (CN); SUO, Hongbin, Hangzhou, Zhejiang 311121 (CN)
(74) Representative: Barker Brettell LLP
(86) International application number: PCT/CN2022/130728
(87) International publication number: WO 2023/088142

(56) References cited:
- WO-A1-2020/199013
- CN-A- 103 699 573
- CN-A- 106 845 518
- CN-A- 110 414 569
- CN-A- 111 899 755
- CN-A- 111 966 798
- CN-A- 112 420 069
- CN-A- 112 562 693
- CN-A- 113 593 597
- US-A1- 2020 082 809
- SHILEI ZHANG ET AL: "A Robust Unsupervised Speaker Clustering of Speech Utterances", NATURAL LANGUAGE PROCESSING AND KNOWLEDGE ENGINEERING, 2005. IEEE NLP- KE '05. PROCEEDINGS OF 2005 IEEE INTERNATIONAL CONFERENCE ON WUHAN, CHINA 30-01 OCT. 2005, PISCATAWAY, NJ, USA,IEEE, PISCATAWAY, NJ, USA, 30 October 2005 (2005-10-30), pages 115 - 120, XP010896912, ISBN: 978-0-7803-9361-5, DOI: 10.1109/NLPKE.2005.1598718

## Description

### TECHNICAL FIELD

The present disclosure relates to the field of information technology and, in particular, to an audio signal processing method and apparatus, a device and a storage medium.

### BACKGROUND

With the continuous development of science and technology, the application of artificial intelligence (AI) technology such as a speech recognition and a role separation are becoming more and more widespread.

Currently, an unsupervised role separation based on a single channel speech is an essential and challenging technology in a conference system, and has a wide range of application requirement.

However, the inventor of the present application found that an accuracy of the current unsupervised role separation based on the single channel speech is relatively low. CN 112420069 A discloses a voice processing method and apparatus, a machine-readable medium, and a device.

### SUMMARY

It is an object of the invention to overcome the shortcomings in the prior art. This object of the invention is solved by the independent claims. Specific embodiments are defined in the dependent claims.

### BRIEF DESCRIPTION OF DRAWINGS

The accompanying drawings here are incorporated into the specification and form a part of the specification, which illustrate embodiments in accordance with the present disclosure and are used together with the specification to explain principles of the present disclosure.

To describe the technical solutions in embodiments of the present disclosure or related technologies more clearly, the following briefly introduces the accompanying drawings needed for describing the embodiments or the related technologies. Apparently, persons of ordinary skill in the art may still derive other drawings from these accompanying drawings without creative effort.
FIG. 1 is a flowchart of an audio signal processing method provided by an embodiment of the present disclosure.
FIG. 2 is a schematic diagram of an application scenario provided by an embodiment of the present disclosure.
FIG. 3 is a flowchart of an audio signal processing method provided by another embodiment of the present disclosure.
FIG. 4 is a flowchart of an audio signal processing method provided by yet another embodiment of the present disclosure.
FIG. 5 is a schematic diagram of a clustering result provided by an embodiment of the present disclosure.
FIG. 6 is a flowchart of an audio signal processing method provided by another embodiment of the present disclosure.
FIG. 7 is a schematic structural diagram of an audio signal processing apparatus provided by an embodiment of the present disclosure.
FIG. 8 is a schematic structural diagram of an electronic device embodiment provided by an embodiment of the present disclosure.

### DESCRIPTION OF EMBODIMENTS

To understand the above objectives, features, and advantages of the present disclosure more clearly, a further description for the scheme of the present disclosure will be performed in following. It should be noted that, in a case without conflict, the embodiments of the present disclosure and the features in the embodiments can be combined with each other.

Many specific details are set forth in the following description to fully understand the present disclosure, but the present disclosure can also be implemented in other manners different from those described here. Obviously, the embodiments in the description are only part of the embodiments of the present disclosure, and not all embodiments.

Under a normal circumstance, an unsupervised role separation based on a single channel speech is an essential and challenging technology in a conference system, and has a wide range of application requirement. However, an accuracy of the current unsupervised role separation based on the single channel speech is relatively low. The unsupervised role separation specifically refers to obtain the number of roles in the speech and time information for each role to speak in a case of unknown role information in implementation.

In response to the issue, the present disclosure provides a role processing method. The following will introduce the method in conjunction with specific embodiments.

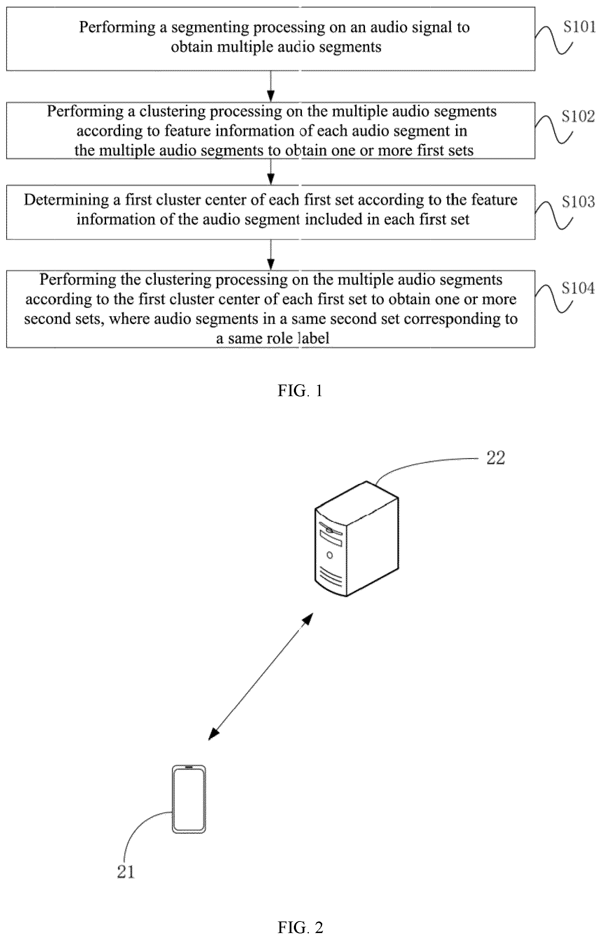

FIG. 1 is a flowchart of an audio signal processing method provided by an embodiment of the present disclosure. The embodiment can be applied to a case of performing an audio signal process in a client terminal. The method can be performed by an audio signal processing apparatus. The apparatus can be implemented in a software and/or a hardware. The apparatus can be provided in an electronic device, such as a terminal, specifically including a smartphone, a handheld computer, a tablet computer, a wearable device with a display screen, a desktop, a laptop, an all-in-one computer, a smart home device, etc. Or, the embodiment can be applied to a case of performing an audio signal process in a server terminal. The method can be performed by an audio signal processing apparatus. The apparatus can be implemented in a software and/or the hardware. The apparatus can be provided in an electronic device, such as a server. Taking a terminal as an example, the audio signal processing method will be introduced below. In addition, the audio signal processing method described in the embodiment can be applied to application scenarios such as the unsupervised role separation of the single channel speech, a speech recognition, and a conference system. As shown in FIG. 1, the specific steps of the method are as follows.

S101, performing a segmenting processing on an audio signal to obtain multiple audio segments.

As shown in FIG. 2, a terminal 21 can obtain an audio signal from a server 22. Or, the audio signal is stored locally in the terminal 21. Or else, the terminal 21 can collect the audio signal by an audio collecting module. Specifically, the audio signal may be a single channel speech. Further, the terminal 21 can perform an unsupervised role separation on the audio signal. In some other embodiments, the terminal 21 can further send its local audio signal or collected audio signal to the server 22, and the server 22 performs an unsupervised role separation on the audio signal. The following is an introduction which takes a case where the terminal 21 performs an unsupervised role separation on the audio signal as an example.

Specifically, the terminal 21 can perform a segmenting processing on the audio signal to obtain multiple audio segments. Specifically, the segmenting processing can be performed by using methods such as a Voice Active Detection (VAD) and a Bayesian Information Criterion (BIC) etc. An audio segment can also be called a speech segment, and each audio segment obtained by segmenting can be an audio segment with 1-2 seconds.

S102, performing a clustering processing on the multiple audio segments according to feature information of each audio segment in the multiple audio segments to obtain one or more first sets.

For example, the terminal 21 can use x-vector, Resnet or other embedding vector representation methods to extract feature information of each audio segment. The feature information specifically may be an embedding vector representation (embedding) feature. In which, x-vector, Resnet are respectively an embedding vector representation method based on a neural network model. Further, the terminal 21 can calculate a similarity degree between each two audio segments based on the embedding feature of each audio segment. It can be understood that a similarity degree between an audio segment A and an audio segment B may be a similarity degree between an embedding feature of the audio segment A and an embedding feature of the audio segment B. The greater the similarity degree the smaller a distance between the embedding feature of the audio segment A and the embedding feature of the audio segment B, and at the same time, the smaller a distance between the audio segment A and the audio segment B.

Further, an Agglomerative Hierarchical Clustering (AHC) algorithm is used to perform the clustering processing on the multiple audio segments obtained after the segmenting processing to obtain the one or more first sets. Each first set may include more than one audio segment. The one or more first sets may be recorded as an initial clustering result. The AHC clustering method specifically may be that: two audio segments with a highest similarity degree score are determined based on the similarity degree between each two audio segments in the multiple audio segments, and the two audio segments are merged into a new audio segment. Further, a similarity degree between the new audio segment and each two audio segments in other merged audio segments is calculated, and the merging process and the similarity degree calculating process are repeated until a constraint criterion is reached. For example, the merging is stopped when the similarity degree score is lower than a preset threshold value, thereby obtaining the one or more first sets. It can be understood that the clustering method is not limited to AHC, and can also be other clustering algorithms, such as a k-means clustering algorithm (kmeans).

S103, determining a first cluster center of each first set according to the feature information of the audio segment included in each first set.

For example, after performing the clustering processing on the multiple audio segments obtained after the segmenting processing through the above-mentioned clustering method, for each first set in the one or more first sets, according to the embedding features respectively corresponding to more than one audio segments included in the first set, the first cluster center of the first set is determined.

S104, performing the clustering processing on the multiple audio segments according to the first cluster center of each first set to obtain one or more second sets, where audio segments in a same second set corresponding to a same role label.

After determining the first cluster center of each first set, the clustering processing can be re-performed on the multiple audio segments obtained after the segmenting processing according to the first cluster center of each first set to obtain the one or more second sets, and the audio segments in the same second set corresponding to the same role label. The one or more second sets can be recorded as an updated clustering result. The updated clustering result is a result of updating the initial clustering result.

The embodiment of the present disclosure performs a segmenting processing on an audio signal to obtain multiple audio segments, performs a clustering processing on the multiple audio segments according to feature information of each audio segment in the multiple audio segments to obtain one or more first sets, determines a first cluster center of each first set according to the feature information of the audio segment included in each first set, and performs a clustering processing on the multiple audio segments according to the first cluster center of each first set to obtain one or more second sets, where audio segments in a same second set corresponding to a same role label. That is to say, after an initial clustering processing is performed on the multiple audio segments, a re-clustering processing can also be performed on the multiple audio segments according to the first cluster center of each first set, thereby improving an accuracy of an unsupervised role separation based on a single channel speech.

On the basis of the above embodiments, the determining the first cluster center of each first set according to the feature information of the audio segment included in each first set can be implemented in multiple manners, and several kinds below are introduced.

In a feasible implementation manner, the determining the first cluster center of each first set according to the feature information of the audio segment included in each first set includes: determining a first target segment in the first set, where a sum of similarity degree scores between the first target segment and other audio segments in the first set is greater than a first threshold value; and taking feature information corresponding to the first target segment as the first cluster center of the first set.

For example, after an initial clustering processing is performed on the multiple audio segments, three first sets are obtained, which are respectively recorded as first set 1, first set 2 and first set 3. Each first set includes more than one audio segment. For example, the first set 1 includes audio segment A, audio segment B and audio segment C. When determining a first cluster center of the first set 1, one audio segment may be determined from the audio segment A, the audio segment B and the audio segment C as the first target segment. The first target segment may be a segment representing the first cluster center. For example, assuming that the audio segment A is used as the first target segment, a similarity degree score between the audio segment A and the audio segment B, and a similarity degree score between the audio segment A and the audio segment C are calculated, and the two similarity degree scores are accumulated to obtain a sum of the similarity degree scores. If the sum of the similarity degree scores is greater than a first threshold value, the audio segment A can be used as the first target segment, otherwise, a traversal processing is performed to find the first target segment. Or, sums of the similarity degree scores are respectively calculated when the audio segment A is assumed to be the first target segment, the audio segment B is assumed to be the first target segment, and the audio segment C is assumed to be the first target segment. If the sum of the similarity degree scores when the audio segment A is assumed to be the first target segment is the largest, then the audio segment A is determined to be the first target segment. A process of calculating the sums of the similarity degree scores when the audio segment B or the audio segment C is assumed to be the first target segment can refer to the process of calculating the sum of the similarity degree scores when the audio segment A is assumed to be the first target segment, which will not be elaborated here. Further, feature information corresponding to the first target segment is used as the first cluster center of the first set. It can be understood that the first target segment obtained in this way is a segment that best represents the first cluster center. Therefore, in this way, the one or more second sets obtained after S104 is executed are relatively more accurate than the one or more first sets obtained in S102.

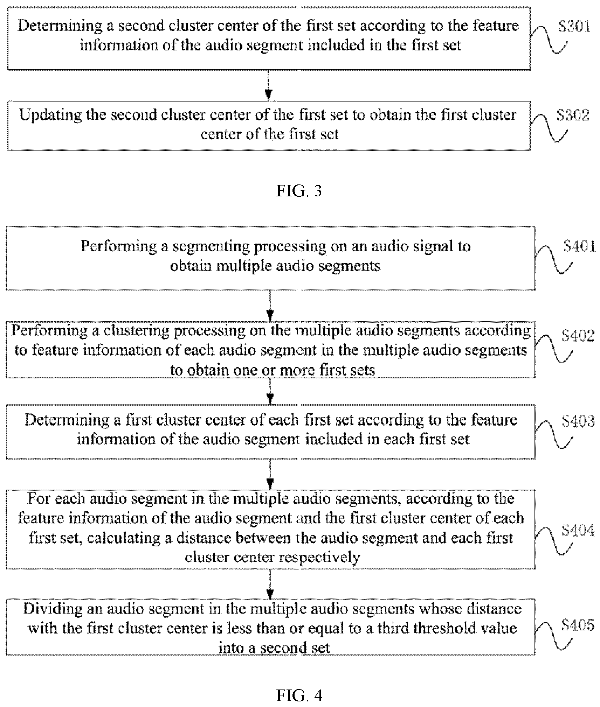

In another feasible implementation manner, the determining the first cluster center of each first set according to the feature information of the audio segment included in each first set includes the following several steps as shown in FIG. 3.

S301, determining a second cluster center of the first set according to the feature information of the audio segment included in the first set.

Optionally, the determining the second cluster center of the first set according to the feature information of the audio segment included in the first set includes: calculating a first mean value of the feature information of the audio segment included in the first set; and taking the first mean value as the second cluster center of the first set.

For example, the first set 1 includes the audio segment A, the audio segment B and the audio segment C. Since embedding features correspond to the audio segment A, the audio segment B and the audio segment C respectively, therefore, an mean value of the embedding features respectively corresponding to the audio segment A, the audio segment B and the audio segment C can be calculated, and the mean value is recorded as the first mean value. Further, the first mean value is used as an initial cluster center of the first set 1, and the initial cluster center is recorded as the second cluster center.

S302, updating the second cluster center of the first set to obtain the first cluster center of the first set.

For example, the initial cluster center of the first set 1, that is, the second cluster center, can be updated to obtain an updated cluster center of the first set 1, and the updated cluster center is recorded as the first cluster center.

Optionally, the updating the second cluster center of the first set to obtain the first cluster center of the first set includes: determining one or more second target segments in the first set according to the second cluster center of the first set, where a similarity degree between feature information corresponding to the second target segments and the second cluster center of the first set is greater than or equal to a second threshold value; and determining the first cluster center of the first set according to the one or more second target segments in the first set.

For example, the one or more second target segments are determined from the audio segment A, the audio segment B, and the audio segment C according to the second cluster center of the first set 1. The one or more second target segments may be K-nearest neighbor segments of the second cluster center. That is to say, the similarity degree between a embedding feature of each second target segment in the one or more second target segments and the second cluster center is greater than or equal to the second threshold value, that is, a distance between the embedding feature of each second target segment and the second cluster center is less than a certain threshold value. For example, the audio segment A and the audio segment B can respectively be used as the second target segment. Furthermore, the first cluster center of the first set 1, that is, the updated cluster center, can be determined based on the audio segment A and the audio segment B.

Optionally, the determining the first cluster center of the first set according to the one or more second target segments in the first set includes: calculating a second mean value of the feature information corresponding to the one or more second target segments in the first set; and taking the second mean value as the first cluster center of the first set.

For example, a mean value of the embedding feature of the audio segment A and the embedding feature of the audio segment B is calculated, and the mean value is recorded as the second mean value. Further, the second mean value is used as the first cluster center of the first set 1. It can be understood that the second cluster center of the first set 1 can be calculated through S301, the second cluster center can be a mean value of the embedding features respectively corresponding to the audio segment A, the audio segment B and the audio segment C. Further, after determining the K-nearest neighbor segments of the second cluster center, i.e. the audio segment A and the audio segment B, the mean value of the embedding feature of the audio segment A and the embedding feature of the audio segment B can be used as the first cluster center. The first cluster center is more accurate than the second cluster center. Therefore, the one or more second sets obtained after S 104 ia executed are more accurate than the one or more first sets obtained in S102.

FIG. 4 is a flowchart of an audio signal processing method provided by yet another embodiment of the present disclosure. The specific steps of the method are as follows.

S401, performing a segmenting processing on an audio signal to obtain multiple audio segments.

S402, performing a clustering processing on the multiple audio segments according to feature information of each audio segment in the multiple audio segments to obtain one or more first sets.

S403, determining a first cluster center of each first set according to the feature information of the audio segment included in each first set.

Specifically, the implementation manners and the specific principles of S401-S403 are consistent with the implementation manners and specific principles of the corresponding steps described in the above embodiments, which will not be elaborated here.

S404, for each audio segment in the multiple audio segments, according to the feature information of the audio segment and the first cluster center of each first set, calculating a distance between the audio segment and each first cluster center respectively.

For example, after executing S401, nine audio segments are obtained, which are sequentially recorded as an audio segment A, an audio segment B, an audio segment C, an audio segment D, an audio segment E, an audio segment F, an audio segment G, an audio segment H an audio segment J. After executing S402, three first sets are obtained. The first set 1 includes the audio segment A, the audio segment B, and the audio segment C. The first set 2 includes the audio segment D, the audio segment E, and the audio segment F. The first set 3 includes the audio segment G, the audio segment H, and the audio segment J. After executing S403, the first cluster centers respectively corresponding to the first set 1, the first set 2, and the first set 3 are obtained. The first cluster center can be obtained by several above-mentioned methods, which will not be elaborated here. Further, for each audio segment in the nine audio segments, according to embedding feature of the audio segment, a distance between the audio segment and the first cluster center of the first set 1, a distance between the audio segment and the first cluster center of the first set 2 and a distance between the audio segment and the first cluster center of the first set 3 are calculated. Since the three distances may be different, therefore, it can be determined which first cluster center is closest to the audio segment according to the three distances.

S405, dividing an audio segment in the multiple audio segments whose distance with the first cluster center is less than or equal to a third threshold value into a second set.

For example, it can be determined the distance between each audio segment of the nine audio segments and which first cluster center distances is closest. Thus, more than one audio segment around each first cluster center can be determined, thereby achieving re-clustering of the nine audio segments. Further, the more than one audio segment around each first cluster center is divided into one second set. For example, there are three first sets, then there are three first cluster centers. Each first cluster center can correspond to one second set, then there are also three second sets, and more than one audio segment included in each second set are audio segments whose distance with the first cluster center is closest. It can be considered here that the distance respectively between the more than one audio segment included in the second set and the first cluster center is less than or equal to the third threshold value. That is to say, the second set may be a result after partially or completely adjusting more than one audio segment in the first set, where the audio segments in a same second set corresponding to a same role label.

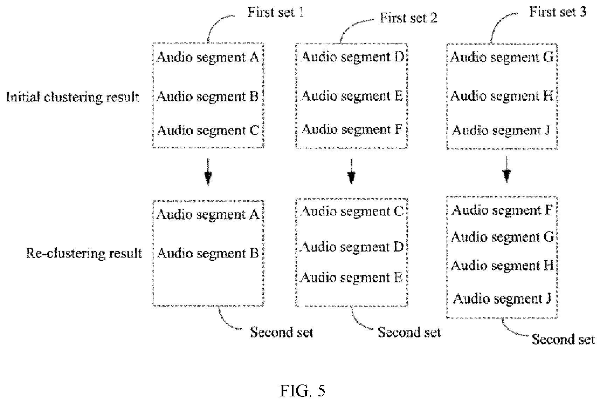

For example, as shown in FIG. 5, the first set 1, the first set 2 and the first set 3 are initial cluster results. After determining the first cluster centers respectively corresponding to the first set 1, the first set 2 and the first set 3, it is determined that a distance between the audio segment C and the first cluster center of the first set 2 is closest, therefore, the audio segment C can be adjusted from the first set 1 to the first set 2. Similarly, a distance between the audio segment F and the first cluster center of the first set 3 is closest, therefore, the audio segment F is adjusted from the first set 2 to the first set 3. Thereby, a re-clustering result as shown in FIG. 5, i.e. the second set corresponding to each first set, is obtained.

The embodiment of the present disclosure performs a segmenting processing on an audio signal to obtain multiple audio segments, performs a clustering processing on the multiple audio segments according to feature information of each audio segment in the multiple audio segments to obtain one or more first sets, determines a first cluster center of each first set according to the feature information of the audio segment included in each first set, and performs a clustering processing on the multiple audio segments according to the first cluster center of each first set to obtain one or more second sets, where audio segments in a same second set corresponding to a same role label. That is to say, after an initial clustering processing is performed on the multiple audio segments, a re-clustering processing can also be performed on the multiple audio segments according to the first cluster center of each first set, thereby improving an accuracy of an unsupervised role separation based on a single channel speech. Thereby, it can effectively avoids a clustering result error caused by an inaccurate cluster center, such as two audio segments of the same role are divided into different classes, or a portion of the audio segments of one role are divided into a class of another role.

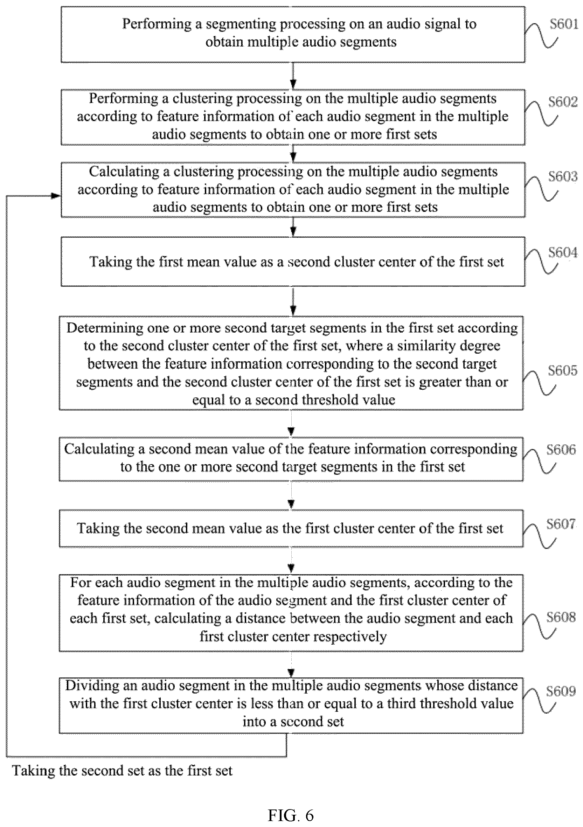

FIG. 6 is a flowchart of an audio signal processing method provided by another embodiment of the present disclosure. The specific steps of the method are as follows:
S601, performing a segmenting processing on an audio signal to obtain multiple audio segments;
S602, performing a clustering processing on the multiple audio segments according to feature information of each audio segment in the multiple audio segments to obtain one or more first sets;
S603, calculating a first mean value of the feature information of the audio segment included in the first set;
S604, taking the first mean value as a second cluster center of the first set;
S605, determining one or more second target segments in the first set according to the second cluster center of the first set, where a similarity degree between feature information corresponding to the second target segments and the second cluster center of the first set is greater than or equal to a second threshold value;
S606, calculating a second mean value of the feature information corresponding to the one or more second target segments in the first set;
S607, taking the second mean value as the first cluster center of the first set;
S608, for each audio segment in the multiple audio segments, according to the feature information of the audio segment and the first cluster center of each first set, calculating a distance between the audio segment and each first cluster center respectively; and
S609, dividing an audio segment in the multiple audio segments whose distance with the first cluster center is less than or equal to a third threshold value into a second set.

Specifically, the implementation manners and the specific principles of S601-S609 are consistent with the implementation manners and specific principles of the corresponding steps described in the above embodiments, which will not be elaborated here.

In addition, in the embodiment, after executing S609, the second set can also be used as the first set, thereby S603-S609 are repeatedly executed. A number of iterations of S603-S609 may be a preset number. That is to say, based on an initial clustering result, the second cluster center and the first cluster center can be iteratively updated for multiple times, and a role label can be reassigned to each audio segment. During each iteration, a K-nearest neighbor segment of the second cluster center, that is, one or more second target segments, is changeable. Therefore, during each iteration, the first cluster center can be updated, and the first cluster center can continuously approach to a real cluster center, thereby greatly reducing the impact of a noise point on the cluster centers and ensuring the accuracy of the cluster centers. The accuracy of role separation can be increased from 90% to 94% by the methods described in the embodiments of the present disclosure, and the effect is significantly improved.

In addition, the embodiment of the present disclosure further provides a role processing method in a conference scene, the method includes the following steps:
receiving an audio signal of multiple roles in a conference;
performing a segmenting processing on the audio signal to obtain multiple audio segments;
performing a clustering processing on the multiple audio segments according to feature information of each audio segment in the multiple audio segments to obtain one or more first sets;
calculating a first mean value of the feature information of the audio segment comprised in the first set;
taking the first mean value as a second cluster center of the first set;
determining one or more second target segments in the first set according to the second cluster center of the first set, wherein a similarity degree between feature information corresponding to the second target segments and the second cluster center of the first set is greater than or equal to a second threshold value;
calculating a second mean value of the feature information corresponding to the one or more second target segments in the first set;
taking the second mean value as a first cluster center of the first set;
for each audio segment in the multiple audio segments, according to the feature information of the audio segment and the first cluster center of each first set, calculating a distance between the audio segment and each first cluster center respectively;
dividing an audio segment in the multiple audio segments whose distance with the first cluster center is less than or equal to a third threshold value into a second set;
determining role information of multiple speakers in the audio signal according to the second set; and
taking the second set as the first set, and performing a process from calculation of the first mean value to determination of the role information repeatedly.

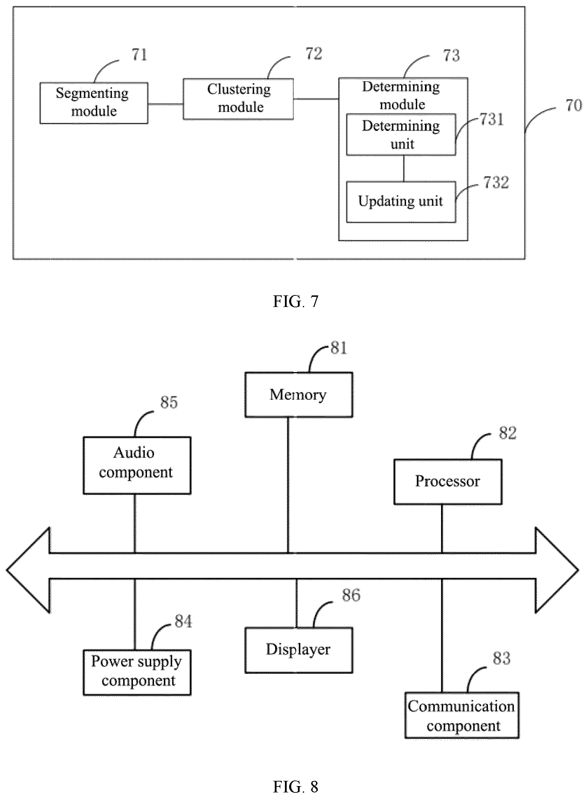

FIG. 7 is a schematic structural diagram of an audio signal processing apparatus provided by an embodiment of the present disclosure. The audio signal processing apparatus provided by the embodiment of the present disclosure can execute the process flow provided by the audio signal processing method embodiment. As shown in FIG. 7, the audio signal processing apparatus 70 includes:
a segmenting module 71, configured to perform a segmenting processing on an audio signal to obtain multiple audio segments;
a clustering module 72, configured to perform a clustering processing on the multiple audio segments according to feature information of each audio segment in the multiple audio segments to obtain one or more first sets; and
a determining module 73, configured to determine a first cluster center of each first set according to the feature information of the audio segment included in each first set;
the clustering module 72 is further configured to perform the clustering processing on the multiple audio segments according to the first cluster center of each first set to obtain one or more second sets, where audio segments in a same second set corresponding to a same role label.

Optionally, the determining module 73 is specifically configured to: determine a first target segment in the first set, where a sum of similarity degree scores between the first target segment and other audio segments in the first set is greater than a first threshold value; and take feature information corresponding to the first target segment as the first cluster center of the first set.

Optionally, the determining module 73 includes a determining unit 731 and an updating unit 732, where the determining unit 731 is configured to determine a second cluster center of the first set according to the feature information of the audio segment included in the first set; and the updating unit 732 is configured to update the second cluster center of the first set to obtain the first cluster center of the first set.

Optionally, the determining unit 731 is specifically configured to: calculate a first mean value of the feature information of the audio segment included in the first set; and take the first mean value as the second cluster center of the first set.

Optionally, the updating unit 732 is specifically configured to: determine one or more second target segments in the first set according to the second cluster center of the first set, where a similarity degree between feature information corresponding to the second target segments and the second cluster center of the first set is greater than or equal to a second threshold value; and determine the first cluster center of the first set according to the one or more second target segments in the first set.

Optionally, the updating unit 732, when determining the first cluster center of the first set according to the one or more second target segments in the first set, is specifically configured to: calculate a second mean value of the feature information corresponding to the one or more second target segments in the first set; and take the second mean value as the first cluster center of the first set.

Optionally, the clustering module 72, when performing the clustering processing on the multiple audio segments according to the first cluster center of each first set to obtain the one or more second sets, is specifically configured to: for each audio segment in the multiple audio segments, according to the feature information of the audio segment and the first cluster center of each first set, calculate a distance between the audio segment and each first cluster center respectively; and divide an audio segment in the multiple audio segments whose distance with the first cluster center is less than or equal to a third threshold value into a second set.

The audio signal processing apparatus of the embodiment shown in FIG. 7 can be configured to execute technical solutions of the above method embodiments. The implementation principles and technical effects thereof are similar, and will not be elaborated here.

The internal functions and structure of the audio signal processing apparatus are described above, and the apparatus can be implemented as an electronic device. FIG. 8 is a schematic structural diagram of an electronic device embodiment provided by an embodiment of the present disclosure. As shown in FIG. 8, the electronic device includes a memory 81 and a processor 82.

The memory 81, configured to store a program. In addition to the above-mentioned program, the memory 81 may further be configured to store other various data to support operations on the electronic device. Examples of such data include any application program or instruction of method for operating on the electronic device, contact data, phonebook data, messages, pictures, videos, etc.

Memory 81 may be implemented by any type of volatile or non-volatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The processor 82 is coupled to the memory 81 and executes the program stored in the memory 81 for:
performing a segmenting processing on an audio signal to obtain multiple audio segments;
performing a clustering processing on the multiple audio segments according to feature information of each audio segment in the multiple audio segments to obtain one or more first sets;
determining a first cluster center of each first set according to the feature information of the audio segment included in each first set; and
performing the clustering processing on the multiple audio segments according to the first cluster center of each first set to obtain one or more second sets, where audio segments in a same second set corresponding to a same role label.

Further, as shown in FIG. 8, the electronic device may also include: a communication component 83, a power supply component 84, an audio component 85, a displayer 86 and other components. Only some components are schematically shown in FIG. 8, which does not mean that the electronic device only includes the components shown in FIG. 8.

The communication component 83 is configured to facilitate a wired or wireless communication between the electronic device and other devices. The electronic devices can access a wireless network based on the communication standard, such as WiFi, 2G or 3G, or a combination thereof. In an exemplary embodiment, the communication component 83 receives a broadcast signal or broadcast related information from an external broadcast management system via a broadcast channel. In an exemplary embodiment, the communication component 83 also includes a near field communication (NFC) module to facilitate a short-range communication. For example, the NFC module can be implemented based on a Radio Frequency Identification (RFID) technology, an Infrared Data Association (IrDA) technology, an Ultra-Wideband (UWB) technology, a Bluetooth (BT) technology and other technologies.

The power supply component 84 provides power to various components of the electronic device. The power supply component 84 may include a power management system, one or more power supplies, and other components associated with generating, managing, and distributing power to the electronic device.

The audio component 85 is configured to output and/or input the audio signal. For example, the audio component 85 includes a microphone (MIC), the microphone is configured to receive an external audio signal when the electronic device in an operating mode, such as a calling mode, a recording mode, and a voice recognition mode. The received audio signal may be further stored in the memory 81 or sent via the communication component 83. In some embodiments, the audio component 85 also includes a speaker for outputting the audio signal.

The displayer 86 includes a screen, the screen may include a liquid crystal display (LCD) and a touch panel (TP). If the screen includes a touch panel, the screen may be implemented as a touch screen to receive an input signal from a user. The touch panel includes one or more touch sensors to sense a touch, a swipe, and a gesture on the touch panel. The touch sensor may not only sense a boundary of a touch or swipe action, but also detect a duration time and a pressure associated with the touch or swipe action.

In addition, an embodiment of the present disclosure provides a computer-readable storage medium, storing a computer program therein, where the computer program is executed by a processor to implement the audio signal processing method described in the above embodiments.

In addition, an embodiment of the present disclosure provides a conference system including a terminal and a server; where the terminal and the server are communicatively connected;
the terminal is configured to send an audio signal of multiple roles in a conference to the server, and the server is configured to perform the role processing method in a conference scene described in the above embodiment; or
the server is configured to send the audio signal of multiple roles in the conference to the terminal, and the terminal is configured to perform the role processing method in the conference scene described in the above embodiment.

It should be noted that, in the art, relational terms such as "first" and "second" etc. are only used to distinguish one entity or operation from another entity or operation, and do not necessarily require or imply any such actual relationship or sequence exists between those entities or operations. Furthermore, the terms "comprise," "include", or any other variation thereof are intended to cover a non-exclusive inclusion, thereby enable a process, method, subject, or device included a list of elements not only includes those elements, but also includes other elements which are not expressly listed, or includes elements inherent to the process, method, subject, or device. In a case without further limitation, an element defined by a statement "comprises a..." does not exclude the presence of additional identical elements in the process, method, subject, or device included the element.

The above descriptions are only specific embodiments of the present disclosure to enable those skilled in the art to understand or implement the present disclosure. Various modifications to those embodiments will be readily apparent to those skilled in the art, and the generic principles defined herein may be practiced in other embodiments without departing from the scope of the disclosure. Therefore, the present disclosure is not to be limited to the embodiments described herein but is to be accorded the widest scope consistent with the principles and novel features disclosed herein.

## Claims

1. An audio signal processing method, comprising
performing (S101, S401, S601) a segmenting processing on an audio signal to obtain multiple audio segments;
performing (S102, S402, S602) a clustering processing on the multiple audio segments according to feature information of each audio segment in the multiple audio segments to obtain one or more first sets;
determining (S103, S403) a first cluster center of each first set according to the feature information of the audio segment comprised in each first set; **characterized by**
performing (S104) a clustering processing on the multiple audio segments according to the first cluster center of each first set to obtain one or more second sets, wherein audio segments in a same second set correspond to a same speaker in a conference system with multiple speakers;
wherein the determining (S103, S403) the first cluster center of each first set according to the feature information of the audio segment comprised in each first set comprises:
determining (S301) a second cluster center of the first set according to the feature information of the audio segment comprised in the first set; and
updating (S302) the second cluster center of the first set to obtain the first cluster center of the first set.

2. The method according to claim 1, wherein the determining (S103, S403) the first cluster center of each first set according to the feature information of the audio segment comprised in each first set comprises:
determining a first target segment in the first set, wherein a sum of similarity degree scores between the first target segment and other audio segments in the first set is greater than a first threshold value; and
taking feature information corresponding to the first target segment as the first cluster center of the first set.

3. The method according to claim 1, wherein the determining (S301) the second cluster center of the first set according to the feature information of the audio segment comprised in the first set comprises:
calculating (S603) a first mean value of the feature information of the audio segment comprised in the first set; and
taking (S604) the first mean value as the second cluster center of the first set.

4. The method according to claim 1, wherein the updating the second cluster center of the first set to obtain the first cluster center of the first set comprises:
determining (S605) one or more second target segments in the first set according to the second cluster center of the first set, wherein a similarity degree between feature information corresponding to the second target segments and the second cluster center of the first set is greater than or equal to a second threshold value; and
determining the first cluster center of the first set according to the one or more second target segments in the first set.

5. The method according to claim 4, wherein the determining the first cluster center of the first set according to the one or more second target segments in the first set comprises:
calculating (S606) a second mean value of the feature information corresponding to the one or more second target segments in the first set; and
taking (S607) the second mean value as the first cluster center of the first set.

6. The method according to claim 1, wherein the performing (S104) the clustering processing on the multiple audio segments according to the first cluster center of each first set to obtain the one or more second sets comprises:
for each audio segment in the multiple audio segments, according to the feature information of the audio segment and the first cluster center of each first set, calculating (S404, S608) a distance between the audio segment and each first cluster center respectively; and
dividing (S405, S609) an audio segment in the multiple audio segments whose distance with the first cluster center is less than or equal to a third threshold value into a second set.

7. An audio signal processing apparatus, comprising:
a segmenting module (71), configured to perform a segmenting processing on an audio signal to obtain multiple audio segments;
a clustering module (72), configured to perform a clustering processing on the multiple audio segments according to feature information of each audio segment in the multiple audio segments to obtain one or more first sets; and
a determining module (73), configured to determine a first cluster center of each first set according to the feature information of the audio segment comprised in each first set;
**characterized in that**
the clustering module (72) is further configured to perform a clustering processing on the multiple audio segments according to the first cluster center of each first set to obtain one or more second sets, wherein audio segments in a same second set correspond to a same speaker in a conference system with multiple speakers;
wherein the determining module (73) comprises a determining unit (731) and an updating unit (732),
wherein the determining unit (731) is configured to determine a second cluster center of the first set according to the feature information of the audio segment comprised in the first set; and
the updating unit (732) is configured to update the second cluster center of the first set to obtain the first cluster center of the first set.

8. The audio signal processing apparatus according to claim 7, wherein the determining unit (731) is specifically configured to:
calculate a first mean value of the feature information of the audio segment comprised in the first set; and
take the first mean value as the second cluster center of the first set.

9. The audio signal processing apparatus according to claim 7, wherein the updating unit (732) is configured to:
determine one or more second target segments in the first set according to the second cluster center of the first set, wherein a similarity degree between feature information corresponding to the second target segments and the second cluster center of the first set is greater than or equal to a second threshold value; and
determine the first cluster center of the first set according to the one or more second target segments in the first set.

10. The audio signal processing apparatus according to claim 9, wherein the updating unit (732), when determining the first cluster center of the first set according to the one or more second target segments in the first set, is configured to:
calculate a second mean value of the feature information corresponding to the one or more second target segments in the first set; and
take the second mean value as the first cluster center of the first set.

11. The audio signal processing apparatus according to claim 7, wherein the clustering module (72), when performing the clustering processing on the multiple audio segments according to the first cluster center of each first set to obtain the one or more second sets, is configured to:
for each audio segment in the multiple audio segments, according to the feature information of the audio segment and the first cluster center of each first set, calculate a distance between the audio segment and each first cluster center respectively; and
divide an audio segment in the multiple audio segments whose distance with the first cluster center is less than or equal to a third threshold value into a second set.

12. A computer-readable storage medium storing a computer program therein, wherein the computer program is executed by a processor to implement the method according to any one of claims 1 to 6.

13. A conference system comprising a terminal and a server;
wherein the terminal and the server are communicatively connected;
the terminal is configured to send an audio signal of multiple roles in a conference to the server, and the server is configured to perform the method according to any one of claims 1 to 6; or
the server is configured to send the audio signal of multiple roles in the conference to the terminal, and the terminal is configured to perform the method according to any one of claims 1 to 6.

## Patentansprüche

1. Audiosignalverarbeitungsverfahren, umfassend
Durchführen (S101, S401, S601) einer Segmentierungsverarbeitung an einem Audiosignal, um mehrere Audiosegmente zu erlangen;
Durchführen (S102, S402, S602) einer Clustering-Verarbeitung an den mehreren Audiosegmenten gemäß Merkmalsinformationen von jedem Audiosegment in den mehreren Audiosegmenten, um einen oder mehrere erste Sätze zu erlangen;
Bestimmen (S103, S403) eines ersten Clusterzentrums jedes ersten Satzes gemäß den Merkmalsinformationen des Audiosegments, das in jedem ersten Satz umfasst ist; **gekennzeichnet durch**
Durchführen (S104) einer Clustering-Verarbeitung an den mehreren Audiosegmenten gemäß dem ersten Clusterzentrum von jedem ersten Satz, um einen oder mehrere zweite Sätze zu erlangen, wobei Audiosegmente in einem gleichen zweiten Satz einem gleichen Sprecher in einem Konferenzsystem mit mehreren Sprechern entsprechen;
wobei das Bestimmen (S103, S403) des ersten Clusterzentrums jedes ersten Satzes gemäß den Merkmalsinformationen des Audiosegments, das in jedem ersten Satz umfasst ist, Folgendes umfasst:
Bestimmen (S301) eines zweiten Clusterzentrums des ersten Satzes gemäß den Merkmalsinformationen des Audiosegments, das in dem ersten Satz umfasst ist; und
Aktualisieren (S302) des zweiten Clusterzentrums des ersten Satzes, um das erste Clusterzentrum des ersten Satzes zu erlangen.

2. Verfahren nach Anspruch 1, wobei das Bestimmen (S103, S403) des ersten Clusterzentrums jedes ersten Satzes gemäß den Merkmalsinformationen des Audiosegments, das in jedem ersten Satz umfasst ist, Folgendes umfasst:
Bestimmen eines ersten Zielsegments in dem ersten Satz, wobei eine Summe von Ähnlichkeitsgradbewertungen zwischen dem ersten Zielsegment und anderen Audiosegmenten in dem ersten Satz größer als ein erster Schwellenwert ist; und
Nehmen von Merkmalsinformationen, die dem ersten Zielsegment entsprechen, als das erste Clusterzentrum des ersten Satzes.

3. Verfahren nach Anspruch 1, wobei das Bestimmen (S301) des zweiten Clusterzentrums des ersten Satzes gemäß den Merkmalsinformationen des Audiosegments, das in dem ersten Satz umfasst ist, Folgendes umfasst:
Berechnen (S603) eines ersten Durchschnittswerts der Merkmalsinformationen des Audiosegments, das in dem ersten Satz umfasst ist; und
Nehmen (S604) des ersten Durchschnittswerts als das zweite Clusterzentrum des ersten Satzes.

4. Verfahren nach Anspruch 1, wobei das Aktualisieren des zweiten Clusterzentrums des ersten Satzes, um das erste Clusterzentrum des ersten Satzes zu erlangen, Folgendes umfasst:
Bestimmen (S605) eines oder mehrerer zweiter Zielsegmente in dem ersten Satz gemäß dem zweiten Clusterzentrum des ersten Satzes, wobei ein Ähnlichkeitsgrad zwischen Merkmalsinformationen, die den zweiten Zielsegmenten und dem zweiten Clusterzentrum des ersten Satzes entsprechen, größer als oder gleich einem zweiten Schwellenwert ist; und
Bestimmen des ersten Clusterzentrums des ersten Satzes gemäß dem einen oder den mehreren zweiten Zielsegmenten in dem ersten Satz.

5. Verfahren nach Anspruch 4, wobei das Bestimmen des ersten Clusterzentrums des ersten Satzes gemäß dem einen oder den mehreren zweiten Zielsegmenten in dem ersten Satz Folgendes umfasst:
Berechnen (S606) eines zweiten Durchschnittswerts der Merkmalsinformationen, die dem einen oder den mehreren zweiten Zielsegmenten in dem ersten Satz entsprechen; und
Nehmen (S607) des zweiten Durchschnittswerts als das erste Clusterzentrum des ersten Satzes.

6. Verfahren nach Anspruch 1, wobei das Durchführen (S104) der Clustering-Verarbeitung an den mehreren Audiosegmenten gemäß dem ersten Clusterzentrum von jedem ersten Satz, um den einen oder die mehreren zweiten Sätze zu erlangen, Folgendes umfasst:
für jedes Audiosegment in den mehreren Audiosegmenten, gemäß den Merkmalsinformationen des Audiosegments und dem ersten Clusterzentrum von jedem ersten Satz, Berechnen (S404, S608) eines Abstands zwischen dem Audiosegment und jeweils jedem ersten Clusterzentrum; und
Teilen (S405, S609) eines Audiosegments in den mehreren Audiosegmenten, dessen Abstand zu dem ersten Clusterzentrum kleiner als oder gleich einem dritten Schwellenwert ist, in einen zweiten Satz.

7. Audiosignalverarbeitungseinrichtung, umfassend
ein Segmentierungsmodul (71), das dazu konfiguriert ist, eine Segmentierungsverarbeitung an einem Audiosignal durchzuführen, um mehrere Audiosegmente zu erlangen;
ein Clustering-Modul (72), das dazu konfiguriert ist, eine Clustering-Verarbeitung an den mehreren Audiosegmenten gemäß Merkmalsinformationen von jedem Audiosegment in den mehreren Audiosegmenten durchzuführen, um einen oder mehrere erste Sätze zu erlangen; und
ein Bestimmungsmodul (73), das dazu konfiguriert ist, ein erstes Clusterzentrum jedes ersten Satzes gemäß den Merkmalsinformationen des Audiosegments, das in jedem ersten Satz umfasst ist, zu bestimmen;
**dadurch gekennzeichnet, dass**
das Clustering-Modul (72) ferner dazu konfiguriert ist, eine Clustering-Verarbeitung an den mehreren Audiosegmenten gemäß dem ersten Clusterzentrum von jedem ersten Satz durchzuführen, um einen oder mehrere zweite Sätze zu erlangen, wobei Audiosegmente in einem gleichen zweiten Satz einem gleichen Sprecher in einem Konferenzsystem mit mehreren Sprechern entsprechen;
wobei das Bestimmungsmodul (73) eine Bestimmungseinheit (731) und eine Aktualisierungseinheit (732) umfasst,
wobei die Bestimmungseinheit (731) dazu konfiguriert ist, ein zweites Clusterzentrum des ersten Satzes gemäß den Merkmalsinformationen des Audiosegments, das in dem ersten Satz umfasst ist, zu bestimmen; und
die Aktualisierungseinheit (732) dazu konfiguriert ist, das zweite Clusterzentrum des ersten Satzes zu aktualisieren, um das erste Clusterzentrum des ersten Satzes zu erlangen.

8. Audiosignalverarbeitungseinrichtung nach Anspruch 7, wobei die Bestimmungseinheit (731) insbesondere zu Folgendem konfiguriert ist:
Berechnen eines ersten Durchschnittswerts der Merkmalsinformationen des Audiosegments, das in dem ersten Satz umfasst ist; und
Nehmen des ersten Durchschnittswerts als das zweite Clusterzentrum des ersten Satzes.

9. Audiosignalverarbeitungseinrichtung nach Anspruch 7, wobei die Aktualisierungseinheit (732) zu Folgendem konfiguriert ist:
Bestimmen eines oder mehrerer zweiter Zielsegmente in dem ersten Satz gemäß dem zweiten Clusterzentrum des ersten Satzes, wobei ein Ähnlichkeitsgrad zwischen Merkmalsinformationen, die den zweiten Zielsegmenten und dem zweiten Clusterzentrum des ersten Satzes entsprechen, größer als oder gleich einem zweiten Schwellenwert ist; und
Bestimmen des ersten Clusterzentrums des ersten Satzes gemäß dem einen oder den mehreren zweiten Zielsegmenten in dem ersten Satz.

10. Audiosignalverarbeitungseinrichtung nach Anspruch 9, wobei die Aktualisierungseinheit (732) beim Bestimmen des ersten Clusterzentrums des ersten Satzes gemäß dem einen oder den mehreren zweiten Zielsegmenten in dem ersten Satz zu Folgendem konfiguriert ist:
Berechnen eines zweiten Durchschnittswerts der Merkmalsinformationen, die dem einen oder den mehreren zweiten Zielsegmenten in dem ersten Satz entsprechen; und
Nehmen des zweiten Durchschnittswerts als das erste Clusterzentrum des ersten Satzes.

11. Audiosignalverarbeitungseinrichtung nach Anspruch 7, wobei das Clustering-Modul (72) beim Durchführen der Clustering-Verarbeitung an den mehreren Audiosegmenten gemäß dem ersten Clusterzentrum von jedem ersten Satz, um den einen oder die mehreren zweiten Sätze zu erlangen, zu Folgendem konfiguriert ist:
für jedes Audiosegment in den mehreren Audiosegmenten, gemäß den Merkmalsinformationen des Audiosegments und dem ersten Clusterzentrum von jedem ersten Satz, Berechnen eines Abstands zwischen dem Audiosegment und jeweils jedem ersten Clusterzentrum; und
Teilen eines Audiosegments in den mehreren Audiosegmenten, dessen Abstand zu dem ersten Clusterzentrum kleiner als oder gleich einem dritten Schwellenwert ist, in einen zweiten Satz.

12. Computerlesbares Speichermedium, auf dem ein Computerprogramm gespeichert ist, wobei das Computerprogramm durch einen Prozessor ausgeführt wird, um das Verfahren nach einem der Ansprüche 1 bis 6 zu implementieren.

13. Konferenzsystem, umfassend ein Endgerät und einen Server; wobei das Endgerät und der Server kommunikativ verbunden sind;
das Endgerät dazu konfiguriert ist, ein Audiosignal von mehreren Rollen in einer Konferenz an den Server zu senden, und der Server dazu konfiguriert ist, das Verfahren nach einem der Ansprüche 1 bis 6 durchzuführen; oder
der Server dazu konfiguriert ist, das Audiosignal von mehreren Rollen in der Konferenz an das Endgerät zu senden, und das Endgerät dazu konfiguriert ist, das Verfahren nach einem der Ansprüche 1 bis 6 durchzuführen.

## Revendications

1. Procédé de traitement de signal audio, comprenant
la réalisation (S101, S401, S601) d'un traitement de segmentation sur un signal audio pour obtenir multiples segments audio ;
la réalisation (S102, S402, S602) d'un traitement de cluster sur les multiples segments audio en fonction des informations de caractéristique de chaque segment audio dans les multiples segments audio pour obtenir un ou plusieurs premiers ensembles ;
la détermination (S103, S403) d'un premier centre de cluster pour chaque premier ensemble en fonction des informations de caractéristique du segment audio compris dans chaque premier ensemble ; **caractérisé par**
la réalisation (S104) d'un traitement de cluster sur les multiples segments audio en fonction du premier centre de cluster de chaque premier ensemble pour obtenir un ou plusieurs deuxièmes ensembles, dans lequel les segments audio d'un même deuxième ensemble correspondent à un même locuteur dans un système de conférence avec multiples locuteurs ;
dans lequel la détermination (S103, S403) du premier centre de cluster de chaque premier ensemble en fonction des informations de caractéristique du segment audio compris dans chaque premier ensemble comprend :
la détermination (S301) d'un deuxième centre de cluster du premier ensemble en fonction des informations de caractéristique du segment audio compris dans le premier ensemble ; et
la mise à jour (S302) du deuxième centre de cluster du premier ensemble pour obtenir le premier centre de cluster du premier ensemble.

2. Procédé selon la revendication 1, dans lequel la détermination (S103, S403) du premier centre de cluster de chaque premier ensemble, en fonction des informations de caractéristique du segment audio compris dans chaque premier ensemble, comprend :
la détermination d'un premier segment cible dans le premier ensemble, dans lequel la somme des scores de degré de similarité entre le premier segment cible et les autres segments audio du premier ensemble est supérieure à une première valeur seuil ; et
la prise des informations de caractéristique correspondant au premier segment cible comme premier centre de cluster du premier ensemble.

3. Procédé selon la revendication 1, dans lequel la détermination (S301) du deuxième centre de cluster du premier ensemble, selon les informations de caractéristique du segment audio compris dans le premier ensemble, comprend :
le calcul (S603) d'une première valeur moyenne des informations de caractéristique du segment audio compris dans le premier ensemble ; et
la prise (S604) de la première valeur moyenne comme deuxième centre de cluster du premier ensemble.

4. Procédé selon la revendication 1, dans lequel la mise à jour du deuxième centre de cluster du premier ensemble pour obtenir le premier centre de cluster du premier ensemble comprend :
la détermination (S605) d'un ou plusieurs deuxièmes segments cibles dans le premier ensemble en fonction du deuxième centre de cluster du premier ensemble, dans lequel un degré de similarité entre les informations de caractéristique correspondant aux deuxièmes segments cibles et le deuxième centre de cluster du premier ensemble est supérieur ou égal à une deuxième valeur seuil ; et
la détermination du centre de premier cluster du premier ensemble selon les un ou plusieurs deuxièmes segments cibles dans le premier ensemble.

5. Procédé selon la revendication 4, dans lequel la détermination du premier centre de cluster du premier ensemble selon les un ou plusieurs deuxièmes segments cibles du premier ensemble comprend :
le calcul (S606) d'une deuxième valeur moyenne des informations de caractéristique correspondant aux un ou plusieurs deuxièmes segments cibles du premier ensemble ; et
la prise (S607) de la deuxième valeur moyenne comme premier centre de cluster du premier ensemble.

6. Procédé selon la revendication 1, dans lequel l'exécution (S104) du traitement de cluster sur les multiples segments audio selon le premier centre de cluster de chaque premier ensemble pour obtenir les un ou plusieurs deuxièmes ensembles comprend :
pour chaque segment audio dans les multiples segments audio, en fonction des informations de caractéristique du segment audio et du premier centre de cluster de chaque premier ensemble, le calcul (S404, S608) d'une distance entre le segment audio et chaque premier centre de cluster respectivement ; et
la division (S405, S609) d'un segment audio dans les multiples segments audio dont la distance avec le centre du premier cluster est inférieure ou égale à une troisième valeur de seuil dans un deuxième ensemble.

7. Appareil de traitement de signal audio, comprenant
un module de segmentation (71), configuré pour effectuer un traitement de segmentation sur un signal audio afin d'obtenir multiples segments audio ;
un module de cluster (72), configuré pour effectuer un traitement de cluster sur les multiples segments audio en fonction des informations de caractéristique de chaque segment audio dans les multiples segments audio afin d'obtenir un ou plusieurs premiers ensembles ; et
un module de détermination (73), configuré pour déterminer un premier centre de cluster de chaque premier ensemble en fonction des informations de caractéristique du segment audio compris dans chaque premier ensemble ;
**caractérisé en ce que**
le module de cluster (72) est en outre configuré pour effectuer un traitement de cluster sur les multiples segments audio en fonction du premier centre de cluster de chaque premier ensemble afin d'obtenir un ou plusieurs deuxièmes ensembles, dans lequel les segments audio d'un même deuxième ensemble correspondent à un même locuteur dans un système de conférence avec multiples locuteurs ;
dans lequel le module de détermination (73) comprend une unité de détermination (731) et une unité de mise à jour (732),
dans lequel l'unité de détermination (731) est configurée pour déterminer un deuxième centre de cluster du premier ensemble en fonction des informations de caractéristique du segment audio compris dans le premier ensemble ; et
l'unité de mise à jour (732) est configurée pour mettre à jour le deuxième centre de cluster du premier ensemble afin d'obtenir le premier centre de cluster du premier ensemble.

8. Appareil de traitement de signal audio selon la revendication 7, dans lequel l'unité de détermination (731) est spécifiquement configurée pour :
calculer une première valeur moyenne des informations de caractéristique du segment audio compris dans le premier ensemble ; et
prendre la première valeur moyenne comme deuxième centre de cluster du premier ensemble.

9. Appareil de traitement de signal audio selon la revendication 7, dans lequel l'unité de mise à jour (732) est configurée pour :
déterminer un ou plusieurs deuxièmes segments cibles dans le premier ensemble en fonction du deuxième centre de cluster du premier ensemble, dans lequel un degré de similarité entre les informations de caractéristique correspondant aux deuxièmes segments cibles et au deuxième centre de cluster du premier ensemble est supérieur ou égal à une deuxième valeur seuil ; et
déterminer le centre du premier centre de cluster du premier ensemble selon les un ou plusieurs deuxièmes segments cibles dans le premier ensemble.

10. Appareil de traitement de signal audio selon la revendication 9, dans lequel l'unité de mise à jour (732), lors de la détermination du premier centre de cluster du premier ensemble selon les un ou plusieurs deuxièmes segments cibles dans le premier ensemble, est configurée pour :
calculer une deuxième valeur moyenne des informations de caractéristique correspondant aux un ou plusieurs deuxièmes segments cibles du premier ensemble ; et
prendre la deuxième valeur moyenne comme premier centre de cluster du premier ensemble.

11. Appareil de traitement de signal audio selon la revendication 7, dans lequel le module de cluster (72), lors de l'exécution du traitement de cluster sur les multiples segments audio selon le premier centre de cluster de chaque premier ensemble pour obtenir les un ou plusieurs deuxièmes ensembles, est configuré pour :
pour chaque segment audio parmi les multiples segments audio, selon les informations de caractéristique du segment audio et le premier centre de cluster de chaque premier ensemble, le calcul d'une distance entre le segment audio et chaque premier centre de cluster respectivement ;
diviser un segment audio en multiples segments audio dont la distance avec le premier centre de cluster est inférieure ou égale à une troisième valeur de seuil dans un deuxième ensemble.

12. Support de stockage lisible par ordinateur contenant un programme informatique, dans lequel le programme informatique est exécuté par un processeur pour mettre en œuvre le procédé selon l'une quelconque des revendications 1 à 6.

13. Système de conférence comprenant un terminal et un serveur ; dans lequel le terminal et le serveur sont connectés de manière communicative ;
le terminal est configuré pour envoyer au serveur un signal audio de multiples rôles dans une conférence, et le serveur est configuré pour réaliser le procédé selon l'une quelconque des revendications 1 à 6 ; ou
le serveur est configuré pour envoyer le signal audio de multiples rôles dans la conférence au terminal, et le terminal est configuré pour réaliser le procédé selon l'une quelconque des revendications 1 à 6.
